# FASCICULE DE BREVET EUROPEEN

(11) **EP 3 691 923 B1**
(45) Date de publication et mention de la délivrance du brevet: **11.08.2021**
(21) Numéro de dépôt: 18788667.6
(22) Date de dépôt: 07.09.2018
(51) Int. Cl.: B60K 17/344, B60K 17/346, F16H 48/40, F16H 3/54, B60K 5/04, B60K 17/16

(54) **DISPOSITIF DE TRANSMISSION DIFFÉRENTIEL DOUBLEUR DE GAMME ET TRANSMISSION À QUATRE ROUES MOTRICES**
DIFFERENZIALGETRIEBEEINRICHTUNG MIT VERDOPPLUNG DER GANGANZAHL UND VIERRADANTRIEBSGETRIEBE
DIFFERENTIAL TRANSMISSION DEVICE WITH DOUBLING OF NUMBER OF GEAR SPEEDS AND FOUR-WHEEL-DRIVE TRANSMISSION

(30) Priorité: 03.10.2017 FR 1759239
(43) Date de publication de la demande: 12.08.2020
(73) Titulaire: Renault S.A.S., 92100 Boulogne-Billancourt (FR)
(72) Inventeur: RAOUL, Michel, 78990 Elancourt (FR); TEIXEIRA, Jean-Michel, 91190 Gif-Sur-Yvette (FR); BRIEC, Alain, 92500 Rueil Malmaison (FR)
(86) Numéro de dépôt international: PCT/EP2018/074214
(87) Numéro de publication internationale: WO 2019/068417

(56) Documents cités:
- FR-A- 1 162 024
- US-A- 2 071 165
- US-A- 2 730 914

## Description

La présente invention concerne les mécanismes réducteurs et les dispositifs de transmission pour véhicules automobiles permettant de doubler la gamme des rapports de transmission d'un véhicule.

Plus précisément, elle a pour objet un dispositif de transmission différentiel entre une boîte de vitesses à plusieurs rapports et deux roues motrices de véhicule, comportant un boîtier extérieur qui reçoit le couple de la boîte de vitesses, et le répartit par un mécanisme intérieur entre deux arbres d'entraînement de roues.

Cette invention trouve une application privilégiée, mais non exclusive, sur les véhicules quatre roues motrices, pourvus d'un GMP (groupe motopropulseur), disposé transversalement à l'avant du véhicule.

Une telle transmission à quatre roues motrices, et le véhicule comportant une telle transmission, font également l'objet de l'invention.

Elle trouve un intérêt particulier sur les véhicules dits « tous chemins » c'est-à-dire présentant des capacités de franchissement supérieures à celles des véhicules routiers normaux, mais qui peuvent néanmoins être dérivés de véhicules de série.

De tels véhicules peuvent parfois être handicapés par un manque de motricité, ou par une difficulté à évoluer à très faible vitesse. Il est alors souhaitable de pouvoir disposer d'une gamme de rapports de vitesses plus courte, pour compenser ce défaut de motricité.

Une première orientation, pour disposer de cette gamme de vitesses supplémentaire, consiste à prévoir une boîte de vitesses supplémentaires à deux rapports, appelée généralement « *boîte transfert* ».

Un agencement de ce type est cependant toujours complexe, coûteux, et trop lourd. Il implique aussi de pouvoir adapter sur un même véhicule, soit une boîte classique, soit cet ensemble, qui n'ont pas du tout le même encombrement.

Une deuxième orientation, est de disposer le réducteur à l'entrée de la boîte. Celle-ci doit alors être renforcée pour accepter les couples plus élevés lorsque la gamme courte est choisie, ce qui la rend spécifique plus lourde et aussi plus coûteuse.

Il apparaît ainsi que le meilleur agencement du mécanisme permettant de disposer de deux gammes de rapports de vitesses sans modification lourde de la boîte de vitesses, avec un encombrement réduit, est de l'associer au différentiel de la boîte. Dans le cas d'un véhicule à quatre roues motrices, il doit de préférence être situé avant le partage des puissances entre les trains avant et arrière du véhicule.

Par les publications FR 2 700 302, EP 0 658 705, EP 00 91 406, on connaît des transmissions pour véhicules à quatre roues motrices ayant un mécanisme doublant la gamme de vitesses, et agencé à cet endroit. Toutefois, l'examen de ces architectures fait ressortir des faiblesses dans les guidages, comme dans les appuis axiaux, qui sont soumis à des efforts élevés, sous des vitesses différentielles.

En outre, des dispositifs de transmission différentiel sont connus des documents FR 1 162 024 A, US 2 730 914 A et US 2 071 165 A.

La présente invention vise à réaliser un mécanisme de doubleur de gamme agencé dans le différentiel. Il doit être robuste, tout en étant compact et en préservant l'intégrité des arbres et de la commande des vitesses.

Dans ce but, elle propose un dispositif de transmission différentiel doubleur de gamme selon la revendication 1.

De préférence, le boîtier extérieur est un boîtier en deux parties, qui supporte la couronne de pont du différentiel, et qui est lui-même supporté par deux paliers disposés dans les carters de la boîte.

Dans la transmission à quatre roues motrices de l'invention, le dispositif de transmission différentiel double la gamme des rapports de boîte, avant le partage des puissances entre les trains avant et arrière du véhicule.

Suivant d'autres caractéristiques :
- le boîtier extérieur est en deux parties, supporte la couronne dite de pont, et est lui-même supporté par deux paliers disposés dans l'un et l'autre des carters de la boîte,
- à l'extrémité intérieure du demi-boîtier gauche est taillée une denture faisant office de couronne du train planétaire,
- à l'extrémité extérieure du demi-boîtier gauche est taillée une cannelure coopérant avec un manchon de crabotage pour établir la gamme de rapports longs,
- le boîtier extérieur contient le second boitier de différentiel du train avant, lui-même contenant le mécanise à planétaires et satellites de répartition de couple aux roues,
- ce boîtier est centré dans le boitier extérieur et maintenu axialement par des butées à aiguilles,
- le boitier intérieur a sur la gauche l'excroissance cylindrique permettant d'accueillir le planétaire du train épicycloïdal,
- le planétaire est maintenu axialement à droite par une butée à aiguilles et à gauche par une butée à aiguilles et un ensemble de rondelles et anneau d'arrêt,
- le boitier intérieur fait office de porte-satellite et comporte :
- des (six dans le mode de réalisation décrit) perçages cylindriques répartis radialement régulièrement, faisant office de paliers droits des satellites,
- des (six dans le mode de réalisation décrit) excroissances réparties radialement régulièrement pour accueillir un anneau cylindrique supportant les satellites à l'extrémité opposée,
- l'anneau cylindrique fermant le porte satellite possède des (six dans le mode de réalisation décrit) embrèvements en V orientés radialement et coopérant avec une forme conjuguée à l'extrémité de chaque excroissance appartenant au boîtier intérieur, et
- les paliers des satellites sont de part et d'autre de la denture, et guidés par des douilles à aiguilles.

La présente invention sera mieux comprise à la lecture de la description suivante d'un mode de réalisation non limitatif de celle-ci, en se reportant aux dessins annexés, sur lesquels :

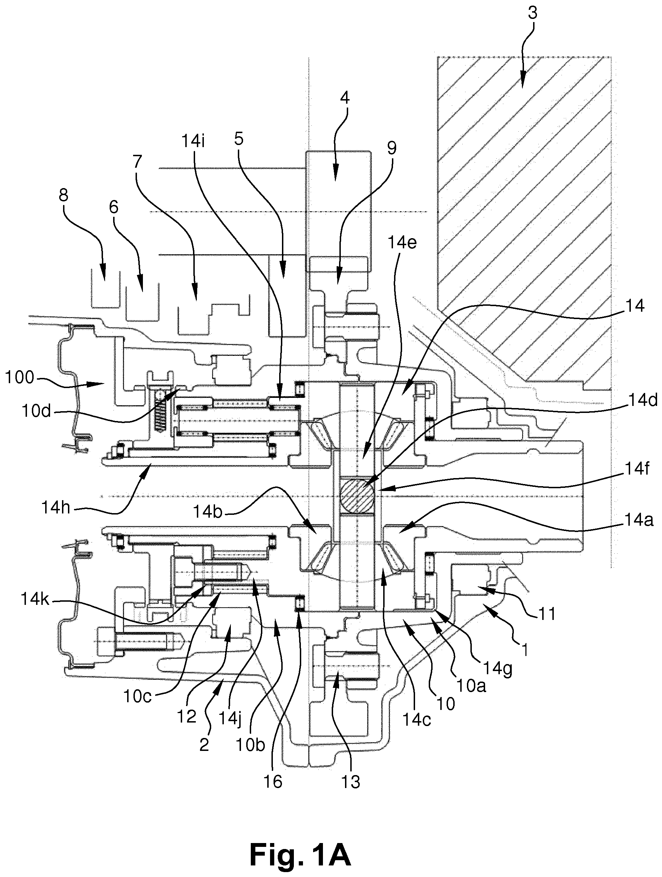

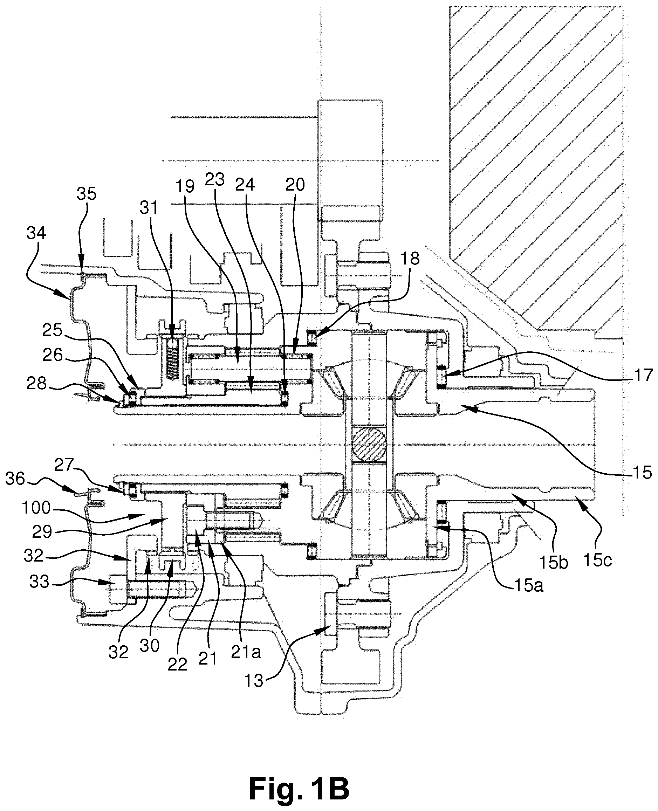

- les figures 1A et 1B montrent la même coupe longitudinale du dispositif,
- la figure 2 est une coupe transversale au niveau du train planétaire,
- la figure 3 est une vue en coupe du boîtier intérieur,
- la figure 4 illustre la transmission du couple, dans le dispositif engagé sur rapport court, et
- la figure 5 illustre la transmission du couple dans le dispositif engagé sur un rapport long, schématisation de la transmission du couple.

La nomenclature des pièces apparaissant sur les schémas est la suivante :
1 carter d'embrayage,
2 carter de mécanisme,
3 volume du système d'embrayage,
4 arbre secondaire de la boîte de vitesses,
5 pignon fou du rapport de 1^{ère},
6 pignon fou du rapport de 2^{ème},
7 baladeur de 1-2^{ème},
8 pignon fou de 3^{ème},
9 couronne de pont,
10 boîtier extérieur support de couronne de pont :
10a demi-boîtier droit,
10b demi-boîtier gauche,
10c denture de couronne de train,
10d cannelures de crabotage avec le baladeur 30 de connexion du planétaire 23,
11 roulement (conique) de support du boîtier extérieur droit,
12 roulement (conique) de support du boîtier extérieur gauche,
13 vis de fixation couronne de pont,
14 boîtier intérieur de différentiel avant,
14a planétaire droit,
14b planétaire gauche,
14c satellites (quatre),
14d axe de satellite,
14e demi-axe de satellite,
14f manchon de maintien de demi-axes de satellites,
14g crans d'entraînement du manchon 15 de fermeture,
14h excroissance cylindrique centrale de guidage du planétaire,
14i portée cylindrique des satellites (six),
14j excroissances (six) du boîtier en pontage vers l'anneau de soutien des satellites,
14k extrémité tronconique des pontages,
15 manchon de fermeture du boîtier 14,
15a flanc du manchon,
15b partie cylindrique centrale,
15c cannelures d'entraînement de la transmission arrière,
16 clip,
17 butée à aiguilles droite d'appui du boîtier intérieur,
18 butée à aiguilles gauche d'appui du boîtier intérieur,
19 satellites (six),
20 palier de satellites à aiguilles (douze),
21 anneau de fermeture du porte-satellites,
21a embrèvement en V sur anneau 21
22 vis de maintien anneau du porte-satellites,
23 planétaire,
24 butée à aiguilles droite du planétaire,
25 rondelle d'appui droite de la butée axiale gauche du planétaire,
26 butée à aiguilles gauche du planétaire,
27 rondelle d'appui gauche de la butée axiale gauche du planétaire,
28 anneau d'arrêt,
29 moyeu d'entrainement du planétaire,
30 baladeur de connexion du planétaire,
31 système de billage du baladeur (agrandissement par trois),
32 plateau de blocage planétaire,
32a cran de blocage du baladeur 30,
33 fixation du plateau de blocage du planétaire,
34 couvercle d'étanchéité,
35 jonc de maintien couvercle,
36 joint d'étanchéité dynamique.

Le mécanisme doubleur de gamme proposé, est intégré dans le différentiel initial d'une boîte de vitesses disposée transversalement. Elle est représentée de manière simplifiée, et partielle, par son carter d'embrayage 1, et son carter de mécanismes 2. Dans le carter 1, la zone hachurée 3 représente le volume tournant du système d'embrayage. Ce volume est une contrainte volumique pour l'implantation du dispositif de doubleur de gamme.

Les autres éléments de la boîte constituant une contrainte volumique sont représentés sommairement : l'arbre secondaire 4, le pignon fou de première 5, le pignon fou de deuxième 6, le baladeur d'engagement des rapports de première et deuxième 7 avec extérieurement la denture de marche arrière, et enfin le pignon fou de troisième 8.

Le différentiel comprend un boîtier extérieur 10 composé d'un demi-boîtier droit 10a, et d'un demi-boîtier gauche 10b. Il porte la couronne de pont 9, liée par exemple par des vis 13. Il reçoit le couple de la boîte de vitesses, et le répartit par un mécanisme intérieur entre deux arbres d'entraînement de roues.

Le boîtier extérieur est supporté dans le carter 1 par l'intermédiaire du roulement 11, par exemple conique. Il est supporté dans le carter 2 par le roulement 12. La couronne de pont 9 est ainsi parfaitement maintenue.

Le boîtier extérieur 10 comprend une partie des éléments constituant le doubleur de gamme. A l'extrémité intérieure du demi-boîtier gauche 10b, la denture 10c constitue la couronne du train épicycloïdal 100. Elle est taillée à l'extrémité intérieure d'un demi-boîtier extérieur 10b. Le porte-satellites du train épicycloïdal 100 est constitué par le boîtier intérieur 14.

Une cannelure 10d est taillée à l'extrémité extérieure du même demi-boîtier. Elle coopère avec un manchon de crabotage 30, pour établir la gamme de rapports longs.

Le boîtier extérieur 10 renferme le boîtier intérieur 14, réalisant avec celui-ci, avec un ensemble de satellites intermédiaires 19 et avec un élément de commande 30, un train épicycloïdal à deux positions 100, permettant de disposer de deux gammes de rapports de boîtes distinctes pour l'entraînement des roues motrices.

Le boîtier 10 est en deux parties 10a, 10b. Il supporte la couronne de pont 9 du différentiel. Il est lui-même supporté par deux paliers 11, 12 disposés dans les carters 1, 2 de la boîte.

Le boîtier intérieur 14, est englobé dans le boîtier extérieur 10. Il renferme le mécanisme différentiel à planétaires 14a, 14b et satellites 14c de répartition du couple aux roues. Dans le mode de réalisation de l'invention non limitatif, illustré par les figures, ce mécanisme est celui du train avant. Il est composé du planétaire droit 14a, du planétaire gauche 14b, et de satellites 14c à portée sphérique.

Dans l'exemple de réalisation non limitatif, illustré par les figures, il y a quatre satellites 14c, implantés sur un petit diamètre. Le guidage des satellites est assuré par l'axe de satellites 14d, et les deux demi-axes de satellites 14e. Enfin, le manchon 14f soutient les demi-axes de satellites 14e.

Le boîtier intérieur 14 est fermé sur le côté droit par un manchon 15, retenu par un clip 16. Il entraîne le manchon par une série de crans 14g. Le manchon 15 possède un flanc plat 15a cranté en périphérie. Ses crans coopèrent avec les crans 14g du boîtier. Il possède aussi une partie cylindrique creuse 15b, centrée dans le boîtier extérieur 10a, et se terminant par des cannelures intérieures 15c, d'entraînement du module de transfert vers la transmission longitudinale conduisant à l'essieu arrière.

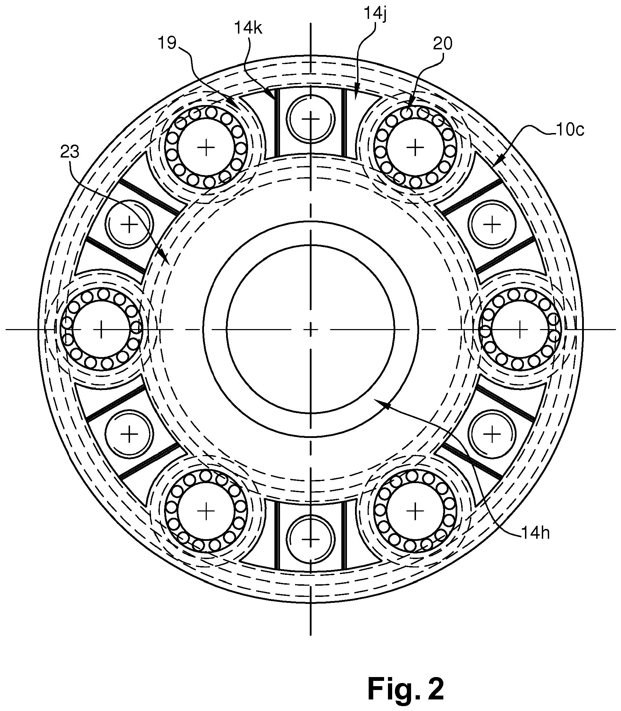

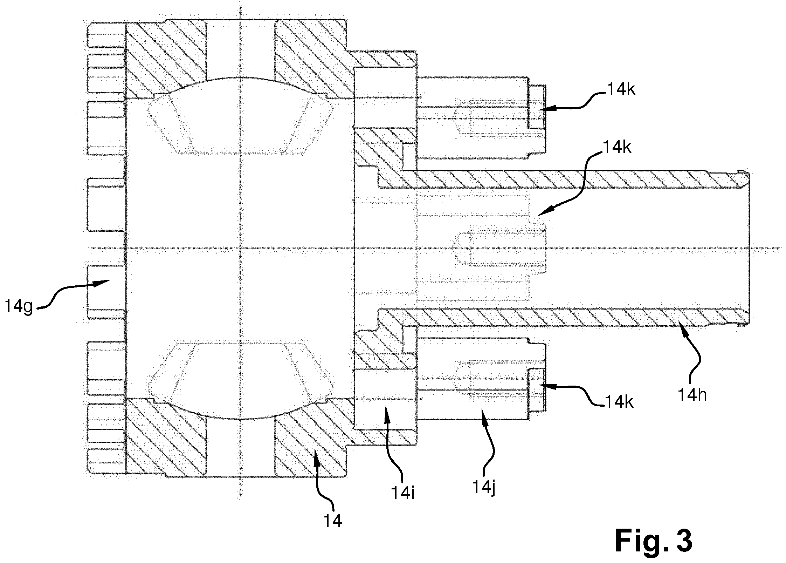

Le côté droit du boîtier 14 présente une excroissance centrale cylindrique creuse 14h, mise en évidence sur les figures 2 et 3. Elle reçoit à l'intérieur la transmission latérale gauche (non représentée), et à l'extérieur, le planétaire 23 du train épicycloïdal 100. L'excroissance 14h sert au guidage du planétaire 23. Le boîtier intérieur 14 possède aussi six portées cylindriques 14i des satellites 19, réparties radialement et régulièrement. Les portées cylindriques 14i forment des paliers droits pour les satellites 19 du train épicycloïdal 100.

Le boîtier intérieur 14 présente des excroissances 14j réparties radialement régulièrement pour accueillir un anneau cylindrique 21 de fermeture du porte-satellites, supportant les satellites 19 à leur extrémité. Les excroissances 14j (six dans l'exemple décrit) font office de pontage vers l'anneau 21 de fermeture du porte-satellites, et de soutien de ces derniers.

Le boîtier 14 reçoit les efforts axiaux de la denture hélicoïdale du planétaire 23. Il prend appui sur le boîtier extérieur de couronne de pont 10, par l'intermédiaire des butées à aiguilles 17 à droite, et 18 à gauche.

Les six satellites 19 ont une portée 14i, de part et d'autre de la denture centrale. Les deux portées sont guidées de part et d'autre de leur denture, par des douilles à aiguilles 20, à droite dans le boîtier intérieur 14 et à gauche dans l'anneau 21 de fermeture du porte-satellites.

L'anneau 21 fermant le porte-satellites possède six embrèvements 21a en V, orientés radialement. Les embrèvements 21a coopèrent avec la forme conjuguée 14k à l'extrémité de chaque excroissance 14j appartenant au boîtier intérieur 14. L'anneau 21 est maintenu par les six vis 22, qui assurent un entraînement robuste, et un maintien stable de l'anneau 21.

Le planétaire 23 est guidé radialement par le boîtier 14. Les efforts radiaux étant équilibrés, il n'est pas nécessaire de prévoir des aménagements particuliers pour cette portée. En revanche, la denture étant hélicoïdale, le planétaire 23 subit des efforts axiaux qu'il reporte à gauche ou à droite. Il doit donc être centré dans le boîtier extérieur 10. Pour cela, il est maintenu axialement par des butées à aiguilles 24, 26. Plus précisément, à droite par une butée à aiguilles 24, et à gauche par une rondelle 25, s'appuyant sur une seconde butée à aiguilles 26. Cette dernière est elle-même arrêtée par une rondelle 27, stoppée par un anneau d'arrêt 28.

Le changement de gamme, consiste à lier le planétaire 23 :
- soit à un élément fixe de la boite pour le bloquer et obtenir la gamme des rapports courts selon un rapport de réduction défini par la raison du train,
- soit au boîtier extérieur 10 pour neutraliser le train épicycloïdal et obtenir la gamme de rapports longs (pas de réduction) .

Pour y parvenir, un moyeu 29 d'entraînement du planétaire est monté sur cannelures en extrémité de ce dernier. Un manchon de crabotage 30 pouvant coulisser axialement, est monté sur les cannelures extérieures du moyeu 29. En déplaçant le manchon 30 vers la gauche à l'aide d'une fourchette non représentée, il coopère avec les crans 32a du plateau de blocage 32. Celui est centré dans le carter 2, et maintenu par des vis 33. Le manchon de crabotage est maintenu en place par le système de billage 31, coopérant avec les extrémités pentues du manchon 30.

La gamme de rapports courts est réalisée selon la raison du train. En effet, en posant Nc le nombre de dents de la couronne, et Np le nombre de dents du planétaire, le rapport de réduction est donné par le rapport R = (Nc+Np)/Np. En déplaçant le manchon 30 vers la droite, il coopère avec les crans 10d en extrémité du boîtier 10. Le planétaire et la couronne du train étant liées, celui-ci est bloqué. Les deux boitiers 10 et 14 sont solidaires. Ils tournent à la même vitesse. La gamme de rapports longs est réalisée.

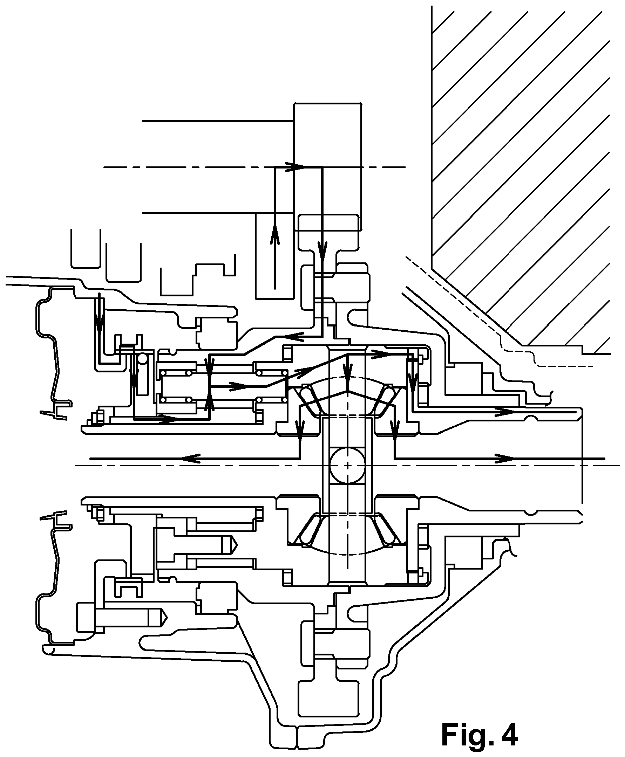

Sur la figure 4, on voit le cheminement des couples sur les rapports courts. Le couple en provenance de l'arbre secondaire 4, est transmis à la couronne de pont 9, puis au boitier extérieur 10. Ce couple est intégralement transmis à la denture 10c du train planétaire. Le planétaire 23, qui est bloqué apporte, un couple d'appui et de réaction défini par la raison du train. Si Cc est le couple à la couronne, le couple au planétaire a pour valeur Cp =Cc x Np/Nc. Les couples sont dans la proportion du nombre de dents. Le couple au porte-satellites, somme des couples au planétaire et à la couronne, est en augmentation dans le rapport de réduction R. Le couple au boîtier 14 est égal au couple au boîtier 10 x R.

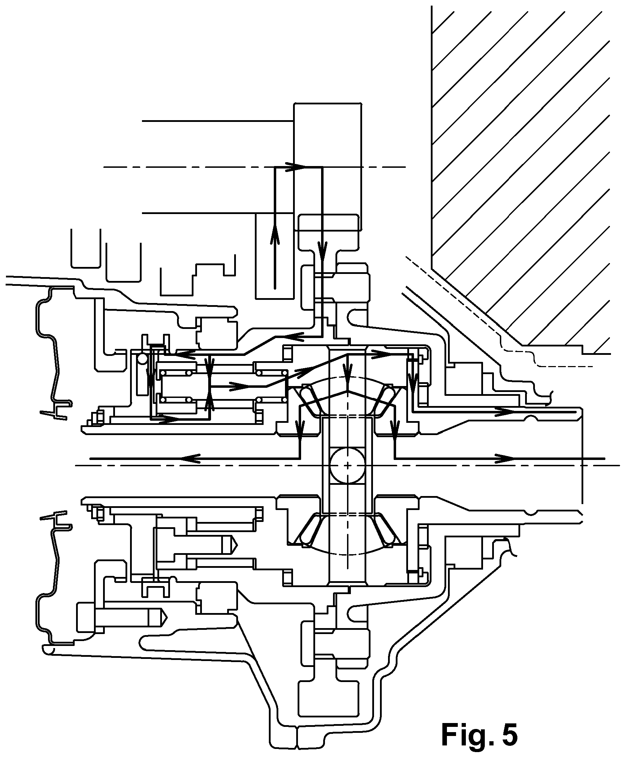

Sur la figure 5, on voit le cheminement des couples sur les rapports longs. Le couple au boîtier extérieur 10 est partagé entre la couronne du train 10c et le planétaire 23 par l'intermédiaire du manchon de crabotage 30 et du moyeu 29. Les couples se réunissent sur le porte-satellites. Le couple au boîtier intérieur 14 est le même que celui au boîtier extérieur 10.

La transmission à quatre roues motrices pour véhicule automobile à GMP disposé transversalement à l'avant du véhicule qui fait aussi l'objet de l'invention, comporte un dispositif de transmission différentiel conforme à cette description, qui double la gamme des rapports de boîte, avant le partage des puissances entre les trains avant et arrière du véhicule. Le véhicule à quatre roues motrices proposé, en est équipé.

## Revendications

1. Dispositif de transmission différentiel doubleur de gamme placé entre une boîte de vitesses à plusieurs rapports et deux roues motrices de véhicule, comportant un boîtier extérieur (10) qui reçoit le couple de la boîte de vitesses et le répartit par un mécanisme intérieur entre deux arbres d'entraînement de roues, le boîtier extérieur (10) renfermant également un boîtier intérieur (14) réalisant avec le boîtier extérieur (10), un ensemble de satellites intermédiaires (19) et un élément de commande (30), un train épicycloïdal à deux positions (100), qui permet de disposer de deux gammes de rapports de boîtes distinctes pour l'entraînement des roues motrices, **caractérisé en ce que** le boîtier intérieur (14) présente une excroissance cylindrique centrale (14h) de guidage du planétaire (23) du train épicycloïdal (100).

2. Dispositif de transmission différentiel selon la revendication 1, **caractérisé en ce que** le boîtier extérieur (10) est un boîtier en deux parties (10a, 10b), qui supporte la couronne de pont (9) du différentiel, et qui est lui-même supporté par deux paliers (11, 12) disposés dans les carters (1, 2) de la boîte.

3. Dispositif de transmission différentiel selon la revendication 2, **caractérisé en ce que** la denture (10c) constituant la couronne du train épicycloïdal (100) est taillée à l'extrémité intérieure d'un demi-boîtier extérieur (10b) .

4. Dispositif de transmission différentiel selon la revendication 3, **caractérisé en ce qu'**une cannelure (10d), taillée à l'extrémité extérieure du même demi-boîtier extérieur (10b), coopère avec un manchon de crabotage (30) pour établir une gamme de rapports longs.

5. Dispositif de transmission différentiel selon l'une des revendications précédentes, **caractérisé en ce que** le boîtier intérieur (14) renferme un mécanisme différentiel, à planétaires (14a, 14b) et satellites (14c) de répartition du couple aux roues.

6. Dispositif de transmission différentiel selon la revendication 5, **caractérisé en ce que** le boîtier intérieur (14) est centré dans le boîtier extérieur (10), et maintenu axialement par des butées à aiguilles (24, 26).

7. Dispositif de transmission différentiel selon l'une des revendications précédentes, **caractérisé en ce que** le porte-satellites du train épicycloïdal (100) est constitué par le boîtier intérieur (14).

8. Dispositif de transmission différentiel selon la revendication 7, **caractérisé en ce que** le boîtier intérieur (14) présente des portées cylindriques (14i) réparties radialement régulièrement, formant des paliers droits pour les satellites (19) du train épicycloïdal (100).

9. Dispositif de transmission différentiel selon la revendication 7 ou 8, **caractérisé en ce que** le boîtier intérieur (14) présente des excroissances (14j) réparties radialement régulièrement pour accueillir un anneau cylindrique (21) de fermeture du porte-satellites, supportant les satellites (19) à leur extrémité.

10. Dispositif de transmission différentiel selon la revendication 9, **caractérisé en ce que** l'anneau (21) fermant le porte-satellites possède des embrèvements (21a) en V, orientés radialement, qui coopèrent avec une forme conjuguée (14k) à l'extrémité de chaque excroissance (14j) appartenant au boîtier intérieur (14).

11. Dispositif de transmission différentiel selon la revendication 10, **caractérisé en ce que** les satellites (21) sont guidés dans des paliers à aiguilles (20), de part et d'autre de leur denture.

12. Transmission à quatre roues motrices pour véhicule automobile à groupe motopropulseur disposé transversalement à l'avant du véhicule, **caractérisé en ce qu'**elle comporte un dispositif de transmission différentiel conforme à l'une des revendications précédentes, doublant la gamme des rapports de boîte, avant le partage des puissances entre les trains avant et arrière du véhicule.

13. Véhicule à quatre roues motrices, **caractérisé en ce qu'**il comporte une transmission à quatre roues motrices conforme à la revendication 12.

## Patentansprüche

1. Differenzialgetriebeeinrichtung mit Verdopplung der Gangzahl, welche zwischen einem Mehrstufengetriebe und zwei Fahrzeugantriebsrädern angeordnet ist und ein äußeres Gehäuse (10) aufweist, welches das Drehmoment von dem Getriebe aufnimmt und es über einen inneren Mechanismus auf zwei Randantriebswellen verteilt, wobei das äußere Gehäuse (10) außerdem ein inneres Gehäuse (14) umschließt, das mit dem äußeren Gehäuse (10), einer Anordnung von Zwischenplanetenrädern (19) und einem Steuerelement (30) ein Planetengetriebe mit zwei Positionen (100) realisiert, welches ermöglicht, über zwei verschiedene Reihen von Übersetzungsverhältnissen für den Antrieb der Antriebsräder zu verfügen, **dadurch gekennzeichnet, dass** das innere Gehäuse (14) einen zentralen zylindrischen Vorsprung (14h) zur Führung des Sonnenrades (23) des Planetengetriebes (100) aufweist.

2. Differenzialgetriebeeinrichtung nach Anspruch 1, **dadurch gekennzeichnet, dass** das äußere Gehäuse (10) ein aus zwei Teilen (10a, 10b) bestehendes Gehäuse ist, welches das Tellerrad (9) des Differenzials trägt und welches seinerseits von zwei Lagern (11, 12) getragen wird, die in den Gehäusen (1, 2) des Getriebes angeordnet sind.

3. Differenzialgetriebeeinrichtung nach Anspruch 2, **dadurch gekennzeichnet, dass** die Verzahnung (10c), welche des Hohlrad des Planetengetriebes (100) bildet, am inneren Ende einer äußeren Gehäusehälfte (10b) ausgebildet ist.

4. Differenzialgetriebeeinrichtung nach Anspruch 3, **dadurch gekennzeichnet, dass** eine Rille (10d), die am äußeren Ende derselben äußeren Gehäusehälfte (10b) ausgebildet ist, mit einer Klauenkupplungsmuffe (30) zusammenwirkt, um eine Reihe von langen Übersetzungsverhältnissen zu erzeugen.

5. Differenzialgetriebeeinrichtung nach einem der vorhergehenden Ansprüche, **dadurch gekennzeichnet, dass** das innere Gehäuse (14) einen Differenzialmechanismus mit Sonnenrädern (14a, 14b) und Planetenrädern (14c) zur Verteilung des Drehmoments auf die Räder umschließt.

6. Differenzialgetriebeeinrichtung nach Anspruch 5, **dadurch gekennzeichnet, dass** das innere Gehäuse (14) in dem äußeren Gehäuse (10) zentriert ist und von Nadeldrucklagern (24, 26) axial gehalten wird.

7. Differenzialgetriebeeinrichtung nach einem der vorhergehenden Ansprüche, **dadurch gekennzeichnet, dass** der Planetenträger des Planetengetriebes (100) aus dem inneren Gehäuse (14) besteht.

8. Differenzialgetriebeeinrichtung nach Anspruch 7, **dadurch gekennzeichnet, dass** das innere Gehäuse (14) gleichmäßig radial verteilte zylindrische Lagerflächen (14i) aufweist, welche Stehlager für die Planetenräder (19) des Planetengetriebes (100) bilden.

9. Differenzialgetriebeeinrichtung nach Anspruch 7 oder 8, **dadurch gekennzeichnet, dass** das innere Gehäuse (14) gleichmäßig radial verteilte Vorsprünge (14j) zum Aufnehmen eines zylindrischen Verschlussringes (21) des Planetenträgers aufweist, der die Planetenräder (19) an ihrem Ende stützt.

10. Differenzialgetriebeeinrichtung nach Anspruch 9, **dadurch gekennzeichnet, dass** der Ring (21), der den Planetenträger verschließt, radial ausgerichtete, V-förmige Aussparungen (21a) besitzt, welche mit einer entsprechenden Form (14k) am Ende jedes zum inneren Gehäuse (14) gehörenden Vorsprungs (14j) zusammenwirken.

11. Differenzialgetriebeeinrichtung nach Anspruch 10, **dadurch gekennzeichnet, dass** die Planetenräder (21) beiderseits ihrer Verzahnung in Nadellagern (20) geführt werden.

12. Allradantriebsgetriebe für ein Kraftfahrzeug mit einem im vorderen Teil des Fahrzeugs quer angeordneten Antriebsstrang, **dadurch gekennzeichnet, dass** es eine Differenzialgetriebeeinrichtung gemäß einem der vorhergehenden Ansprüche aufweist, welche die Anzahl der Übersetzungsverhältnisse vor der Aufteilung der Leistungen zwischen der Vorder- und der Hinterachse des Fahrzeugs verdoppelt.

13. Fahrzeug mit Allradantrieb, **dadurch gekennzeichnet, dass** es ein Allradantriebsgetriebe gemäß Anspruch 12 aufweist.

## Claims

1. Gear-splitting differential transmission device positioned between a multi-ratio gearbox and two drive wheels of a vehicle, including an outer case (10) that receives the gearbox torque and by means of an inner mechanism divides it between two wheel drive shafts, the outer case (10) also housing an inner case (14), which together with the outer case (10), a set of intermediate planetary gears (19) and a control element (30), forms a two-position planetary gear set (100), which makes it possible to obtain two ranges of ratios of separate gearboxes for driving the drive wheels, **characterized in that** the inner case (14) has a central cylindrical protuberance (14h) for guiding the side gear (23) of the planetary gear set (100).

2. Differential transmission device according to Claim 1, **characterized in that** the outer case (10) is a two-part case (10a, 10b) that supports the differential ring gear (9), and that is in turn supported by two bearings (11, 12) arranged in the gearbox housings (1, 2) .

3. Differential transmission device according to Claim 2, **characterized in that** the teeth (10c) forming the ring gear of the planetary gear set (100) are made at the inner end of an outer half case (10b).

4. Differential transmission device according to Claim 3, **characterized in that** a spline (10d), made at the outer end of the same outer half case (10b), engages with an engagement sleeve (30) to establish a long gear range.

5. Differential transmission device according to one of the previous claims, **characterized in that** the inner case (14) houses a differential mechanism with side gears (14a, 14b) and planetary gears (14c) for distributing the torque to the wheels.

6. Differential transmission device according to Claim 5, **characterized in that** the inner case (14) is centred in the outer case (10), and held axially by thrust needle bearings (24, 26).

7. Differential transmission device according to one of the previous claims, **characterized in that** the planet carrier of the planetary gear set (100) is formed by the inner case (14).

8. Differential transmission device according to Claim 7, **characterized in that** the inner case (14) has radially evenly distributed cylindrical seats (14i) forming straight bearings for the planetary gears (19) of the planetary gear set (100).

9. Differential transmission device according to Claim 7 or 8, **characterized in that** the inner case (14) has evenly radially distributed protuberances (14j) for receiving a cylindrical ring (21) for closing the planet carrier, supporting the ends of the planetary gears (19) .

10. Differential transmission device according to Claim 9, **characterized in that** the ring (21) closing the planet carrier has radially oriented V-shaped recesses (21a) that engage with a matching shape (14k) at the end of each protuberance (14j) belonging to the inner case (14) .

11. Differential transmission device according to Claim 10, **characterized in that** the planetary gears (21) are guided in thrust needle bearings (20) on either side of the teeth thereof.

12. Four-wheel drive transmission for a motor vehicle with a power train arranged transversely at the front of the vehicle, **characterized in that** it includes a differential transmission device according to one of the previous claims, doubling the range of the gear ratios, before the power is shared between the front and rear axles of the vehicle.

13. Four-wheel drive vehicle, **characterized in that** it includes a four-wheel drive transmission according to Claim 12.
